# EUROPEAN PATENT APPLICATION

(11) **EP 4 852 461 A1**
(43) Date of publication of application: **09.12.2026**
(21) Application number: 24921067.5
(22) Date of filing: 04.02.2024
(51) Int. Cl.: H04W 4/021

(54) **METHOD AND APPARATUS FOR TRANSCEIVING INFORMATION**

(71) Applicant: 1FINITY INC., Kawasaki-shi, Kanagawa 211-8588 (JP)
(72) Inventor: HAN, Chao, Beijing 100022 (CN); LI, Guorong, Beijing 100022 (CN); YI, Su, Beijing 100022 (CN)
(74) Representative: Haseltine Lake Kempner LLP
(86) International application number: PCT/CN2024/075755
(87) International publication number: WO 2025/161014

(57) **Abstract**

Embodiments of this disclosure provide an information transceiving method and apparatus. The method includes: receiving first information by a terminal equipment from a network device, the first information being at least used to indicate information related to a service area of a service, the service being a service having a specific service area; and determining a procedure of the service by the terminal equipment according to the first information, or transmitting second information by the terminal equipment to the network device, the second information being at least used for the network device to determine whether the terminal equipment is located within the service area of the service.

## Description

### Technical Field

This disclosure relates to the field of communication technologies.

### Background

In a conventional terrestrial network (TN) system, a broadcast or multicast type service is generally applicable to all user equipments (UEs) that have successfully registered in a cell providing a service and support the service. The broadcast or multicast service is also supported in a non-terrestrial network (NTN) system of NR. Compared with the TN system, the NTN system has a larger coverage area, and by using this characteristic, a broadcast or multicast service may provide important added values for the NR NTN system.

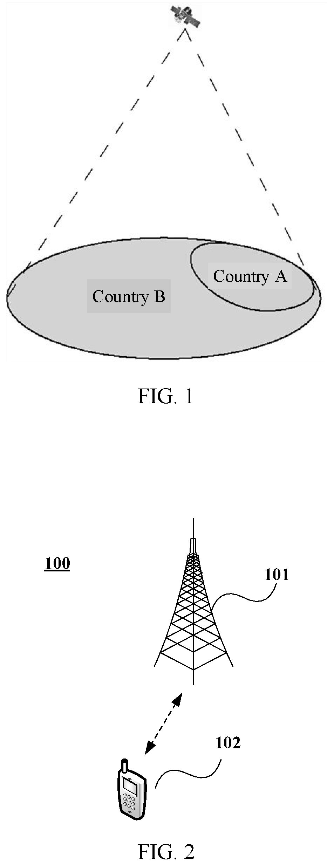

For a terrestrial coverage area of an NR NTN cell, according to an altitude of a satellite, there may exist a case where a coverage area of the cell is large enough to include two or more countries. FIG. 1 is a schematic diagram of a cell coverage area of an NR NTN system. As shown in FIG. 1, the cell of the NR NTN system covers two countries, country A and country B.

Due to such reasons as laws and regulations, charging, and information content, etc., for some services, such as broadcast or multicast type services, a terrestrial service area of the service may be restricted accordingly. For example, content provided by the service may be applicable only to some countries or regions covered by an NTN cell, or some countries or regions may prohibit the service from being provided to terminal equipments in the countries or regions, that is, an intended service area of the service includes only a part of the coverage area of the NTN cell.

In the work of 3GPP Release 19, system information blocks (SIBs) will be enhanced to indicate an intended service area of a service.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

According to the current 3GPP NR NTN work item description (WID), a SIB will be used to indicate an intended service area. However, how to perform subsequent processing according to an indication of the intended service area is not yet clear.

It was found by the inventors that according to different reasons why a service area of a service is restricted9 (that is, only a part of a cell coverage area is included by an intended service area of a service ), after it is determined that the service area of the service is restricted, subsequent processing also needs to be adjusted accordingly.

For example, for a case a service area of a service is restricted due to that content is applicable only to some countries or regions (such as weather forecast, promotional activities, and local news, etc.), for a terminal equipment outside an intended service area, it may be unnecessary or undesirable to further decode the service, thereby avoiding overhead caused by monitoring, detection, and decoding, etc. In contrast, when the service area is restricted because the service is prohibited in some countries or regions due to laws and regulations, a terminal equipment outside the intended service area is prohibited from decoding the service.

Furthermore, for a service that is not applicable outside the intended service area but is not prohibited, after the intended service area of the service is indicated in signaling, a terminal equipment may determine, according to its capability, and requirement, etc., whether to continue subsequent procedures of the service.

For example, for a terminal equipment that supports a service provided in a part of a cell coverage area and is interested in the service, the terminal equipment may determine, according to the intended service area indicated by a network and an area in which the terminal equipment is located, whether the terminal equipment is located in the intended service area of the service. If yes, the terminal equipment further reads, monitors, detects, and decodes the service; if no, the terminal equipment may stop any related procedure of the service, so as to avoid unnecessary overhead, or may continue monitoring the service as needed.

For a terminal equipment that does not support a service provided in a part of a cell coverage area, such as a terminal equipment that does not support reading of an indication of an intended service area, the terminal equipment may still maintain reception of the service even when it is outside the intended service area.

However, for a service that is prohibited outside the intended service area, a terminal equipment outside the intended service area is not allowed to obtain content of the service. According to requirements of obeying laws, and regulations, etc., a network even expects that the service is invisible to a terminal equipment outside the intended service area. Merely indicating the intended service area of the service may not ensure that the service is not monitored, detected, or decoded by a terminal equipment outside the intended service area, such as malicious monitoring or that the terminal equipment is unable to determine whether receiving the service is allowed at a current location.

In order to solve at least one of the above problems, embodiments of this disclosure provide an information transceiving method and apparatus.

According to a first aspect of the embodiments of this disclosure, there is provided an information transceiving apparatus, provided in a terminal equipment, the apparatus including: a first receiving unit configured to receive first information from a network device, the first information being at least used to indicate information related to a service area of a service, the service being a service having a specific service area; and a first processing unit configured to determine a procedure of the service according to the first information; or, a first transmitting unit configured to transmit second information to the network device, the second information being at least used for the network device to determine whether the terminal equipment is located within the service area of the service.

According to a second aspect of the embodiments of this disclosure, there is provided an information transceiving apparatus, provided in a network device, the apparatus including: a second transmitting unit configured to transmit first information to a terminal equipment, the first information being at least used to indicate information related to a service area of a service, the service being a service having a specific service area; and/or, a second receiving unit configured to receive second information from the terminal equipment, the second information being at least used for the network device to determine whether the terminal equipment is located within the service area of the service.

According to a third aspect of the embodiments of this disclosure, there is provided a communication system, including a terminal equipment and/or a network device, wherein the terminal equipment includes the apparatus as described in the embodiment of the first aspect of this disclosure, and the network device includes the apparatus as described in the embodiment of the second aspect of this disclosure.

According to a fourth aspect of the embodiments of this disclosure, there is provided an information transceiving method, the method including: receiving first information by a terminal equipment from a network device, the first information being at least used to indicate information related to a service area of a service, the service being a service having a specific service area; and determining a procedure of the service according to the first information; or, transmitting second information to the network device, the second information being at least used for the network device to determine whether the terminal equipment is located within the service area of the service.

According to a fifth aspect of the embodiments of this disclosure, there is provided an information transceiving method, the method including: transmitting first information by a network device to a terminal equipment, the first information being at least used to indicate information related to a service area of a service, the service being a service having a specific service area; and/or, receiving second information by the network device from the terminal equipment, the second information being at least used for the network device to determine whether the terminal equipment is located within the service area of the service.

According to a sixth aspect of the embodiments of this disclosure, there is provided a computer readable program, which, when executed in an information transceiving apparatus or a terminal equipment, will cause the information transceiving apparatus or the terminal equipment to carry out the information transceiving method as described in the embodiment of the fourth aspect of this disclosure.

According to a seventh aspect of the embodiments of this disclosure, there is provided a computer readable program, which, when executed in an information transceiving apparatus or a network device, will cause the information transceiving apparatus or the network device to carry out the information transceiving method as described in the embodiment of the fifth aspect of this disclosure.

According to an eighth aspect of the embodiments of this disclosure, there is provided a computer readable medium, including a computer readable program, which will cause an information transceiving apparatus or a terminal equipment to carry out the information transceiving method as described in the embodiment of the fourth aspect of this disclosure.

According to a ninth aspect of the embodiments of this disclosure, there is provided a computer readable medium, including a computer readable program, which will cause an information transceiving apparatus or a network device to carry out the information transceiving method as described in the embodiment of the fifth aspect of this disclosure.

An advantage of the embodiments of this disclosure exists in that a processing manner for a service with a service area that is restricted may be adjusted according to a restriction attribute of the service. For example, for a service that is not applicable outside an intended service area, a terminal equipment may determine whether it is within the intended service area and how to process the service, such as monitoring the service in advance when the terminal equipment is approaching the intended service area, thereby improving flexibility. For a service that is prohibited outside the intended service area, the network determines whether the terminal equipment is within the intended service area and assigns a specific identification to the terminal equipment accordingly. Hence, stricter restrictions are supplemented according to a restriction degree of the service, and by scrambling a channel by using a specific identification, use of related services by the terminal equipment outside the intended service area may be avoided.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is a schematic diagram of a cell coverage range of an NR NTN system;
FIG. 2 is a schematic diagram of a communication system of an embodiment of this disclosure;
FIG. 3 is a schematic diagram of an information transceiving method of an embodiment of this disclosure;
FIG. 4 is a schematic diagram of a first implementation of the information transceiving method of the embodiment of this disclosure;
FIG. 5 is an interaction graph of the first implementation of the information transceiving method of the embodiment of this disclosure;
FIG. 6 is a schematic diagram of a second implementation of the information transceiving method of the embodiment of this disclosure;
FIG. 7 is an interaction graph of the second implementation of the information transceiving method of the embodiment of this disclosure;
FIG. 8 is a schematic diagram of a third implementation of the information transceiving method of the embodiment of this disclosure;
FIG. 9 is an interaction graph of the third implementation of the information transceiving method of the embodiment of this disclosure;
FIG. 10 is another schematic diagram of the information transceiving method of the embodiment of this disclosure;
FIG. 11 is a schematic diagram of an information transceiving apparatus of an embodiment of this disclosure;
FIG. 12 is a schematic diagram of an information transceiving apparatus of an embodiment of this disclosure;
FIG. 13 is a block diagram of a systematic structure of a terminal equipment of an embodiment of this disclosure; and
FIG. 14 is a block diagram of a systematic structure of a network device of an embodiment of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and New Radio (NR) in the future, etc., and/or other communication protocols that are currently known or will be developed in the future.

In the embodiments of this disclosure, the term "network device" or "network node", for example, refers to a device in a communication system that accesses a user equipment to the communication network and provides services for the user equipment. The network device or network node may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. For example, a 5G base station gNB may include a gNB CU and one or more gNB DUs, wherein the gNB DU is a logical node of the gNB having a part of functions of the gNB. And a term "cell" may refer to a base station and/or its coverage area, depending on a context of the term. One gNB-DU supports one or more cells, and one cell is supported by one gNB-DU only.

In the embodiments of this disclosure, the term "user equipment (UE)" refers to, for example, an equipment accessing to a communication network and receiving network services via a network device, may also be referred to as "terminal equipment (TE)". The terminal equipment may be fixed or mobile, and may also be referred to as a mobile station (MS), a terminal, a subscriber station (SS), an access terminal (AT), such as a terminal equipment supported by an IAB-node or IAB-donor under an IAB architecture.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In the embodiments of this disclosure, "when...", "in a case of...", "for a case where..." and "if" all indicate being based on one or more conditions or states, and in addition, these expressions are interchangeable.

Scenarios of the embodiments of this disclosure shall be described below by way of examples; however, this disclosure is not limited thereto.

FIG. 2 is a schematic diagram of a communication system of an embodiment of this disclosure, in which a case where a terminal equipment and a network device are taken as examples is schematically shown. As shown in FIG. 2, a communication system 100 may include a network device 101 and a terminal equipment 102. For the sake of simplicity, an example having only one terminal equipment and one network device is schematically given in FIG. 2; however, the embodiment of this disclosure is not limited thereto.

In the embodiment of this disclosure, existing services or services that may be implemented in the future may be performed between the network device 101 and the terminal equipment 102. For example, such services may include but not limited to an enhanced mobile broadband (eMBB), massive machine type communication (mMTC), and ultra-reliable and low-latency communication (URLLC), etc.

In the embodiments of this disclosure, high layer signaling may be, for example, radio resource control (RRC) signaling; for example, it is referred to an RRC message, which includes an MIB, system information, and a dedicated RRC message; or, it is referred to an as an RRC information element (RRC IE). high layer signaling may also be, for example, medium access control (MAC) signaling, or an MAC control element (MAC CE); however, this disclosure is not limited thereto.

Implementations of the embodiments of this disclosure shall be described below with reference to the accompanying drawings; however, these implementations are illustrative only, and are not intended to limit this disclosure.

### Embodiment of a first aspect

The embodiment of this disclosure provides an information transceiving method, applicable to a terminal equipment, such as the terminal equipment 102 in FIG. 2.

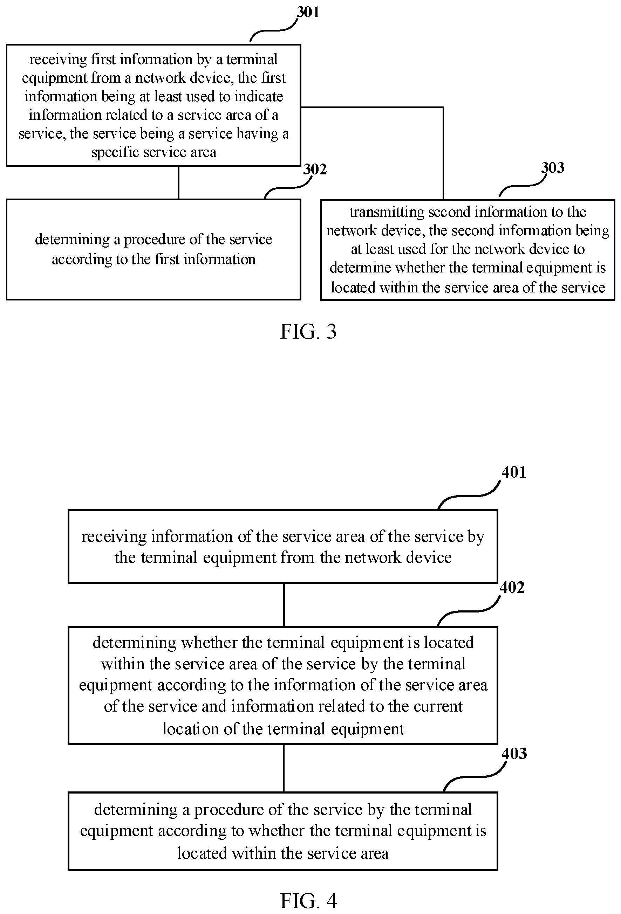

FIG. 3 is a schematic diagram of the information transceiving method of the embodiment of this disclosure. As shown in FIG. 3, the method includes:
301: receiving first information by a terminal equipment from a network device, the first information being at least used to indicate information related to a service area of a service, the service being a service having a specific service area; and
302: determining a procedure of the service according to the first information; or,
303: transmitting second information to the network device, the second information being at least used for the network device to determine whether the terminal equipment is located within the service area of the service.

Operation 302 and operation 303 are alternative, that is, the method includes operation 301 and operation 302, or, the method includes operation 301 and operation 303.

In operation 301, the terminal equipment receives the first information from the network device, the first information being at least used to indicate the information related to a service area of a service, the service being a service having a specific service area.

Or, operation 301 may be described as: receiving information related to a service area of a service by the terminal equipment from the network device, the service being a service having a specific service area.

In some embodiments, the service is a broadcast or multicast service.

In some embodiments, that the service is a service having a specific service area refers to that a broadcast or multicast service may be a customized service within a specific range (service area) and is allowed or valid only within the specific range. When a cell has an excessively large coverage area, it is possible that only a part of the area of the cell is applicable to the service, rather than the entire coverage area of the cell. Therefore, the network needs to notify the terminal equipment of the information related to the service area of the service.

In some embodiments, the service area of the service represents a specific service area of the service, and may also be referred to as an expected service area or a predetermined service area or an intended service area of the service.

In some embodiments, an area not served by the service represents an area outside the specific service area of the service, and may also be referred to as a non-service area or a non-expected service area or a non-predetermined service area or a non-intended area of the service.

In some embodiments, the broadcast or multicast service is not limited to multicast and broadcast services (MBSs) with an intended service area excluding entire cell coverage area, and may also be another broadcast service or multicast service that the network expects to provide to terminal equipment(s) in a predetermined area.

In some embodiments, the first information includes an indication of the service being a service having a specific service area and/or information of the service area of the service.

For example, the information related to a service area indicated by the first information may include the intended service area of the service, that is, information that the network allows or expects the terminal equipment to use the specific service area of the service, or may include a non-intended service area of the service, that is, information that the network prohibits or does not expect the terminal equipment to use an area of the service, i.e. the first information includes the information related to the service area of the service.

For another example, the information related to the service area indicated by the first information may also include or only include indication information for indicating that the service is a service with a serving scope that is a specific area rather than a whole cell, that is, the first information includes an indication of the service being a service having a specific service area, that is, the service is not a cell-specific service.

In some embodiments, the indication of the service being a service having a specific service area may be provided by introducing a new parameter in a SIB or configuration information related to the service, or by enhancing a definition of an existing parameter in a SIB or configuration information related to the service, thereby explicitly indicating that the service is a service having a specific service area, i.e., that the service area of the service is restricted.

For example, that the service is a service having a specific service area may be indicated by at least one of parameters:
intendedArea/intendedCountry/intendedPLMN/intendedTAI ENUMERATED {true};
areaScope/cuntryScope/PLMNSope/TAIScope/partialScope ENUMERATED {true}; and
a parameter areaScope of extended SIB type information, for example, the SIB and the service associated with the SIB are services having specific service areas (service areas are restricted).

In some embodiments, the indication of the service being a service having a specific service area includes indicating, in the SIB or configuration information related to the service, that the terminal equipment reports location-related information, that is, implicitly indicating that the service is a service having a specific service area.

In some embodiments, the information of the service area of the service includes at least one of the following:
a specific beam identification or a list of beam identifications;
a specific PLMN ID or a list of PLMN IDs;
a specific mobile country code (MCC) or a list of mobile country codes;
a specific mobile network code (MNC) or a list of mobile network codes;
a specific tracking area identification (TAI) or a list of mobile tracking area identifications; and
a specific area identification (Area ID) or a list of area identifications, the area identification being an identification assigned by a network for a planned geographical area.

In some embodiments, the service having a specific service area includes a service that is not applicable outside the intended service area.

For example, for some services having specific scopes, their service areas are restricted. For example, in an NTN system, MBS services provided for some specific countries or regions are effective only when they are applicable to a specific scope or within the specific scope, and only a part of a cell coverage area may be included in intended service scopes of the services. Within the same cell, a terminal equipment within the intended service area may obtain a service provided by the service by reading related signaling configuration, etc., whereas a terminal equipment outside the intended service area may possibly not expect to decode or receive the service, so as to avoid unnecessary overhead of detection, processing, and storage, etc. Such services are inapplicable to services outside the scope of the intended service area.

In some embodiments, for the services inapplicable to services outside the scope of the intended service area (not services prohibited from applying outside the scope of the intended service area), operation 302 may be executed, that is, the terminal equipment determines a procedure of the service according to the first information. Such an implementation is referred to as "a first implementation".

Correspondingly, in the first implementation, operation 302 includes: determining whether the terminal equipment is located within the service area of the service by the terminal equipment according to information of the service area (intended service area) of the service and information related to a current location of the terminal equipment; and determining a procedure of the service by the terminal equipment according to whether the terminal equipment is located within the service area.

FIG. 4 is a schematic diagram of the first implementation of the information transceiving method of the embodiment of this disclosure. As shown in FIG. 4, the method includes:
401: receiving information of the service area of the service by the terminal equipment from the network device;
402: determining whether the terminal equipment is located within the service area (intended service area) of the service by the terminal equipment according to the information of the service area (intended service area) of the service and information related to the current location of the terminal equipment; and
403: determining a procedure of the service by the terminal equipment according to whether the terminal equipment is located within the service area.

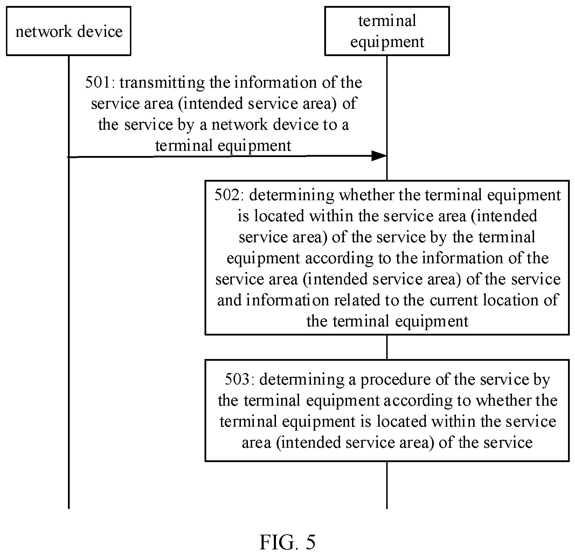

FIG. 5 is an interaction graph of the first implementation of the information transceiving method of the embodiment of this disclosure. As shown in FIG. 5, the method includes:
501: transmitting the information of the service area (intended service area) of the service by a network device to a terminal equipment;
502: determining whether the terminal equipment is located within the service area (intended service area) of the service by the terminal equipment according to the information of the service area (intended service area) of the service and information related to the current location of the terminal equipment; and
503: determining a procedure of the service by the terminal equipment according to whether the terminal equipment is located within the service area (intended service area) of the service.

In operations 402 and 502, the terminal equipment determines whether the terminal equipment is located within the service area (intended service area) of the service according to the information of the service area (intended service area) of the service and information related to the current location of the terminal equipment.

For example, the information related to the current location of the terminal equipment includes at least one of the following:
a beam identification (ID);
a PLMN ID;
a mobile country code MCC;
a mobile network code MNC;
a tracking area identification (TAI);
an area ID assigned by the network;
user location information (ULI);
an RAN area ID;
a zone ID; or
a terminal equipment location determined based on GNSS or a wireless network or WLAN or Bluetooth or a sensor or a TBS location.

In operations 403 and 503, the terminal equipment determines a procedure of the service according to whether the terminal equipment is located within the service area (intended service area) of the service. For example, an implementation of operation 403 includes at least one of the following:
when the terminal equipment is within the service area (intended service area), reading configuration related to the service, and obtaining content of the service, by the terminal equipment;
when the terminal equipment is outside the service area (intended service area), stopping or reducing performing at least one of monitoring, detecting, decoding, and obtaining information related to the service, by the terminal equipment; and
when the terminal equipment is outside the service area (intended service area) and a first condition is satisfied, starting or increasing performing at least one of monitoring, detecting, decoding, and obtaining information related to the service, by the terminal equipment.

For example, the information related to the service includes at least one of the following: system information related to the service; scheduling information related to the service; configuration information related to the service; or specific content of the service.

For example, the first condition includes at least one of the following that: a distance between the terminal equipment and a boundary of the service area (intended service area) is less than a first threshold; or the terminal equipment is moving towards a boundary of the service area (intended service area).

That is, for example,
when the terminal equipment is within the intended service area, the terminal device reads configuration related to the service and further acquires service content of the service; and/or
when the terminal device is outside the intended service area, the terminal device stops monitoring, detecting, decoding, acquiring, or otherwise obtaining system information, scheduling configuration information, service content, or the like associated with the service; and/or
when the terminal equipment is outside the intended service area but a distance between the terminal equipment and the boundary of the intended service area is less than a specific threshold, the terminal device initiates or increases monitoring, detecting, decoding, acquisition, or other obtaining of system information, scheduling configuration information, service content, or the like associated with the service; and/or
when the terminal device is outside the intended service area but is moving toward a boundary of the intended service area, the terminal device initiates or increases monitoring, detection, decoding, acquisition, or other obtaining of system information, scheduling configuration information, service content, or the like associated with the service; and/or
when the terminal equipment is outside the intended service area , a distance between the terminal equipment and the boundary of the intended service area is less than the specific threshold and the terminal equipment is moving towards the boundary of the intended service area, the terminal device initiates or increases monitoring, detecting, decoding acquisition, or other obtaining of system information, scheduling configuration information, service content, or the like associated with the service.

In some embodiments, for a service that is not applicable outside the intended service area (rather than a service that is prohibited from applying outside the intended service area), operation 303 may also be performed, that is, the terminal equipment transmits second information to the network device, the second information being at least used for the network device to determine whether the terminal equipment is located within the service area (intended service area) of the service. That is, according to the second information, the network device determines whether the terminal equipment is located within the service area (intended service area) of the service. Such an implementation is referred to as "a second implementation".

For example, the second information includes information related to the current location of the terminal equipment transmitted by the terminal equipment to the network device.

For example, the second information may further include a location reporting request indication transmitted by the terminal equipment to the network device, which is used for requesting the network device to assign a resource for use by the terminal equipment to report the information related to the current location, hence, the terminal equipment is able to transmit the information related to the current location on the assigned resource.

In addition, specific content of the information related to the current location of the terminal equipment are similar to those in the first implementation, which shall not be repeated herein any further.

In the second implementation, the method may further include: receiving third information by the terminal equipment from the network device, the third information being at least used to indicate whether the terminal equipment is located within the service area (intended service area) of the service.

For example, the third information may include at least one of the following:
a dedicated identification, such as a group identification or an area identification related to the intended service area;
a bit indicating whether the terminal equipment is within the service area (intended service area), such as indicating whether the terminal equipment is within the service area (intended service area) by True or False; or
a bit indicating that the terminal equipment is within the service area (intended service area), such as indicating that the terminal equipment is within the service area (intended service area) by True.

In some embodiments, after receiving the second information reported by the terminal equipment, the network device may determine whether the terminal equipment is located within the intended service area, and indicate to the terminal equipment that the terminal equipment is within the intended service area. However, for example, in a case where valid current location information of the terminal equipment is stored in the network device, the network device may directly indicate whether the terminal equipment is located within the intended service area of the service, without needing to instruct or waiting for the terminal equipment to report the second information.

In addition, if the network device does not receive the second information reported by the terminal equipment within a specified time, and does not store the valid current location information of the terminal equipment, the network device determines that the terminal equipment is located outside the intended service area.

Furthermore, the network device may transmit the indication of whether the terminal equipment is within the intended service area of the service to the terminal equipment, and may also transmit an indication that the terminal equipment is within the intended service area of the service to a terminal equipment within the intended service area.

In the second implementation, the method further includes: determining a procedure of the service by the terminal equipment according to whether the terminal equipment is within the service area (intended service area) of the service indicated in the third information. Reference may be made to the implementations of operations 403 and 503 for specific implementations, which shall not be repeated herein any further.

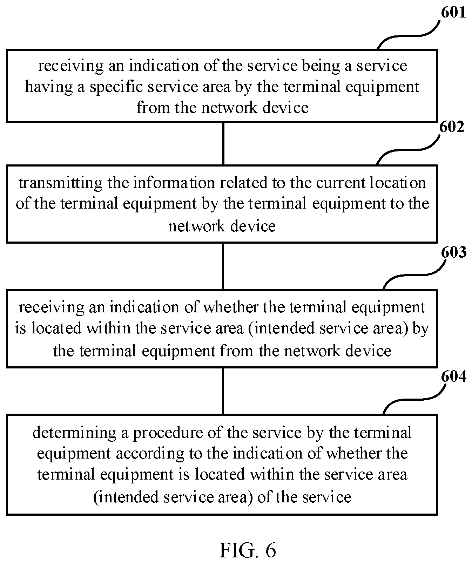

FIG. 6 is a schematic diagram of the second implementation of the information transceiving method of the embodiment of this disclosure. As shown in FIG. 6, the method includes:
601: receiving an indication of the service being a service having a specific service area by the terminal equipment from the network device;
602: transmitting the information related to the current location of the terminal equipment by the terminal equipment to the network device;
603: receiving an indication of whether the terminal equipment is located within the service area (intended service area) by the terminal equipment from the network device; and
604: determining a procedure of the service by the terminal equipment according to the indication of whether the terminal equipment is located within the service area (intended service area) of the service.

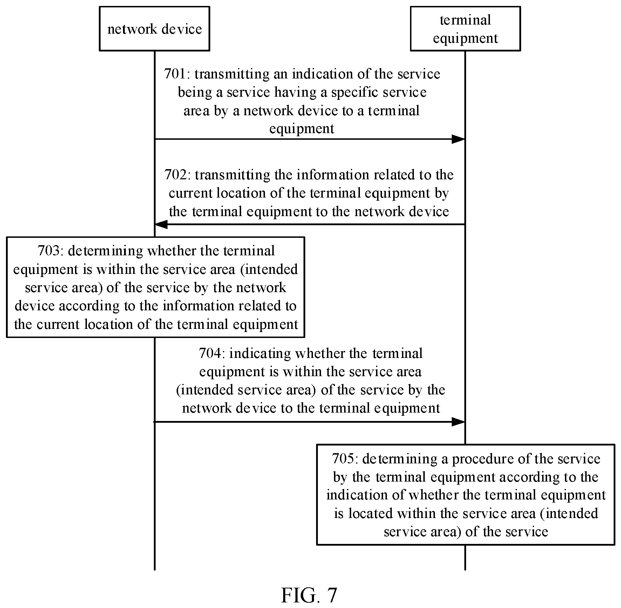

FIG. 7 is an interaction graph of the second implementation of the information transceiving method of the embodiment of this disclosure. As shown in FIG. 7, the method includes:
701: transmitting an indication of the service being a service having a specific service area by a network device to a terminal equipment;
702: transmitting the information related to the current location of the terminal equipment by the terminal equipment to the network device;
703: determining whether the terminal equipment is within the service area (intended service area) of the service by the network device according to the information related to the current location of the terminal equipment;
704: indicating whether the terminal equipment is within the service area (intended service area) of the service by the network device to the terminal equipment; and
705: determining a procedure of the service by the terminal equipment according to the indication of whether the terminal equipment is located within the service area (intended service area) of the service.

In some embodiments, if the network device stores valid current location information of the terminal equipment, operations 602 and 702 may be omitted, and operations 603 and 703 may be directly executed.

In the above description, for the service that is not applicable outside the intended service area (rather than a service that is prohibited from applying outside the intended service area), whether the terminal equipment monitors, detects and decode the service is determined by the terminal equipment. For a terminal equipment outside the intended service area, how to process related services may be determined flexibly according to different scenarios.

For example, for the first implementation, whether the terminal equipment is located within the intended service area is determined by the terminal equipment. The terminal equipment is able to directly determine whether it is within the intended service area of the service according to the intended service area indicated by the network and the location of its own, which is few in signaling interaction. However, it is required that the terminal equipment is able to ensure accurate mapping between the current location and area information.

For example, for the second implementation, whether the terminal equipment is located within the intended service area is determined by the network device. The network device determines whether the terminal equipment is within the intended service area of the service according to the information related to the current location of the terminal equipment. The information related to the current location of the terminal equipment is the latest and valid information related to the current location of the terminal equipment available in the network. The information related to the current location of the terminal equipment may be either information related to the current location contained in the second information reported by the terminal equipment, or information related to the current location of the terminal equipment that has been stored in the network device and is still valid. Hence, the signaling content is simpler and requires on the terminal equipment are less.

In some embodiments, the service having a specific service area further includes a service prohibited from applying outside the intended service area.

For example, for some services having specific scopes, their service areas are restricted. For example, in an NTN system, MBS services provided for some specific countries or regions are allowed to be provided only to the specific scopes, or, in other words, these services are prohibited outside the specific scopes, and providing or using these services may possibly violate local policies, laws, or regulations, or may cause adverse consequences. When only a part of a cell coverage area may be possibly included by the intended service area of the service , it is necessary to ensure that in the same cell, the terminal equipment within the intended service area may use services provided by the service, while for a terminal equipment located outside the intended service area, it may possibly not be allowed to receive content of the service, and the terminal equipment may even be prohibited from monitoring and detecting the information related to the service.

In some embodiments, for the service prohibited from applying outside the intended service area, operations 301 and 303 are executed, that is, the network device transmits the first information to the terminal equipment, and the terminal equipment transmits the second information to the network device according to the first information. The second information is at least used for the network device to determine whether the terminal equipment is located within the service area (intended service area) of the service, that is, the network device determines whether the terminal equipment is within the service area (intended service area) of the service according to the second information. Such an implementation is referred to as "a third implementation".

In the third implementation, the first information may include the indication of the service being a service having a specific service area. For example, the network device transmits the indication via a SIB message or an RRC message.

Similar to the above implementations, the indication of the service being a service having a specific service area may be provided by introducing a new parameter in a SIB or configuration information related to the service, or by enhancing a definition of an existing parameter in a SIB or configuration information related to the service, thereby explicitly indicating that the service is a service having a specific service area, i.e., that the service area of the service is restricted.

For example, that the service is a service having a specific service area is indicated by at least one of parameters as below:

| | |
|---|---|
| intendedArea/intendedCountry/intendedPLMN/intendedTAI | ENUMERATED |
| {true}; | |
| areaScope/cuntryScope/PLMNSope/TAIScope/partialScope | ENUMERATED |
| {true}; and | |

a parameter areaScope of extended SIB type information, for example, the SIB and the service associated with the SIB are services having specific service areas (service areas are restricted).

In some embodiments, the indication of the service being a service having a specific service area includes: instructing the terminal equipment to report location-related information in a SIB or configuration information related to the service, i.e. implicitly indicating that the service is a service having a specific service area (a service area thereof is restricted).

In some embodiments, the method may further include: receiving a location information reporting request by the terminal equipment from the network device. For example, in a case where the network device is providing the service or preparing to provide the service, it further transmits the location information reporting request to the terminal equipment by broadcast or in a terminal equipment-specific manner. Furthermore, when the network device stores the location information of the terminal equipment and the information is still valid, i.e. the network device stores valid current location information of the terminal equipment, the network device may not transmit the location information reporting request to the terminal equipment.

For example, a type of the reporting includes at least one of the following:
reporting aperiodically, such as instructing the terminal equipment to report immediately;
report semi-persistently; for example, a reporting interval is configured according to a velocity of the terminal equipment relative to the satellite, and the reporting interval may be of an ms/s/min/hour level; or
reporting periodically; for example, a reporting interval is identical or similar to that of the report semi-persistently.

For example, the information related to the current location of the terminal equipment includes at least one of the following:
a beam identification (ID);
a PLMN ID;
a mobile country code MCC;
a mobile network code MNC;
a tracking area identification (TAI);
an area ID assigned by the network;
user location information (ULI);
an RAN area ID;
a zone ID; or
a terminal equipment location determined based on GNSS or a wireless network or WLAN or Bluetooth or a sensor or a TBS location.

For example, the manner of broadcast may include at least one of the following:
broadcasting in an entire cell, the cell including both the service area (intended service area) and the non-service area (non-intended service area) of the service;
broadcasting in an entire cell, the cell being providing or being to provide the service; or
broadcasting only on a specific beam, only a part of a coverage area of the beam belonging to the service area (intended service area) of the service.

For example, the location information reporting request is transmitted in a dedicated manner to at least one of the following terminal equipments:
all terminal equipments in a cell;
a terminal equipment with only a part of a coverage area of reported location information mapping belonging to the service area (intended service area) of the service;
a terminal equipment that reports a specific beam, only a part of a coverage area of the beam belonging to the service area (intended service area) of the service;
a terminal equipment that reports multiple pieces of location information of the same type, such as reporting multiple PLMN IDs;
a terminal equipment which reports a location that is near a boundary of the service area (intended service area) of the service;
a terminal equipment with a newly reported location that is closer to the boundary of the service area (intended service area) of the service than a previously reported location; or
a terminal equipment which reports a location near the boundary of the service area (intended service area) of the service and with a newly reported location that is closer to the boundary of the service area (intended service area) of the service than a previously reported location.

In operation 303, the terminal equipment transmits the second information to the network device, the second information being at least used for the network device to determine whether the terminal equipment is within the service area (intended service area) of the service. For example, the terminal equipment transmits the information related to the current location of the terminal equipment to the network device according to the location information reporting request received from the network device.

In some embodiments, a manner in which the terminal equipment transmits the second information (such as the information related to the current location of the terminal equipment) to the network device includes at least one of the following:
transmitting the second information to the network device in a conventional manner, such as reporting a TAI, a PLMN, a beam ID, and a ULI, etc.;
periodically transmitting the second information according to configuration of the network device;
transmitting the second information to the network device when the terminal equipment is interested in the service, such as including at least one of the following:
   requesting by the terminal equipment to the network for reporting location reporting related to services, and reporting the second information according to a resource assigned by the network;
   requesting the second information by the terminal equipment on a resource preassigned by the network;
   including the second information in a service-related signaling message, such as for MBS services, including the second information in MBSInterestIndication-r17 to report the second information to the network while notify the network that the terminal equipment is interested in the MBS services;
   reporting the second information upon receiving the location information report request of the network; and
   reporting the second information when it is detected that a service area of a service only (possibly) contains a part of a coverage of a cell.

In some embodiments, the network device determines whether the terminal equipment is located within the intended service area of the service according to the information related to the current location of the terminal equipment. The information related to the current location of the terminal equipment is available, latest and valid information related to the current location of the terminal equipment in a network, which may be either the information related to the current location included in the second information reported by the terminal equipment, or information related to the current location of the terminal equipment that has already been stored in the network device and is still valid. In addition, if the network device does not receive the second information reported by the terminal equipment within a specified time and valid current location information of the terminal equipment is not stored in the network device, the network device determines that the terminal equipment is located outside the intended service area.

In some embodiments, the method further includes: receiving a first identification from the network device by a terminal equipment satisfying a second condition, the first identification being at least used to scramble transmission on a physical channel related to the service, i.e. the network device assigns a specific identification (first identification) or a related identification list to the terminal equipment satisfying the second condition.

For example, a manner in which the network device assigns the first identification includes at least one of the following:
adding the first identification to the terminal equipment satisfying the second condition; and
modifying identifications already assigned to the terminal equipment satisfying the second condition, so that the identifications already assigned to the terminal equipment satisfying the second condition include the first identification.

For example, the second condition includes at least one of the following:
within the intended service area of the service;
within the service area of the service and a distance from the boundary of the intended service area is less than a second threshold, but without moving towards the boundary of the service area (intended service area) of the service; or
within the service area of the service and a distance from the boundary of the service area (intended service area) of the service is greater than or equal to the second threshold.

In addition, for example, specific content of the second condition are determined according to a degree of strictness of restricted attributes of the service.

In some embodiments, for MBS services, the first identification includes at least one of a G-RNTI, a G-CS-RNTI, and an MCCH-RNTI, that is, the network device scrambles physical channels scheduling and transmitting the MBS services by using a specific G-RNTI or G-CS-RNTI or MCCH-RNTI.

In some embodiments, for a terminal equipment within the service area (intended service area) of the service, the method further includes: receiving fourth information by the terminal equipment from the network device, the fourth information including at least one of the following: scheduling information related to the service; configuration information related to the service; or specific content of the service. In addition, the fourth information is scrambled by using the first identification.

That is, the network device determines whether the terminal equipment is located within the service area of the service according to the information related to the current location of the terminal equipment, and the network device scrambles the physical channels of transmission related to the service by using the first identification, wherein the information related to the current location of the terminal equipment is available, latest and valid information related to the current location of the terminal equipment in a network.

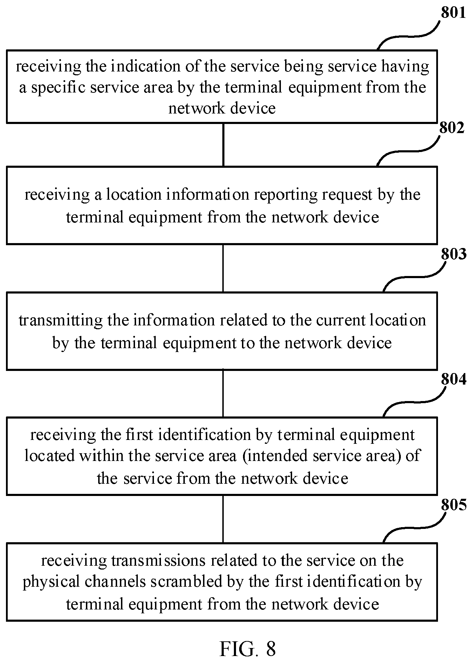

FIG. 8 is a schematic diagram of the third implementation of the information transceiving method of the embodiment of this disclosure. As shown in FIG. 8, the method includes:
801: receiving the indication of the service being service having a specific service area by the terminal equipment from the network device;
802: receiving a location information reporting request by the terminal equipment from the network device;
803: transmitting the information related to the current location by the terminal equipment to the network device;
804: receiving the first identification by terminal equipment located within the service area (intended service area) of the service from the network device; and
805: receiving transmissions related to the service on the physical channels scrambled by the first identification by terminal equipment from the network device.

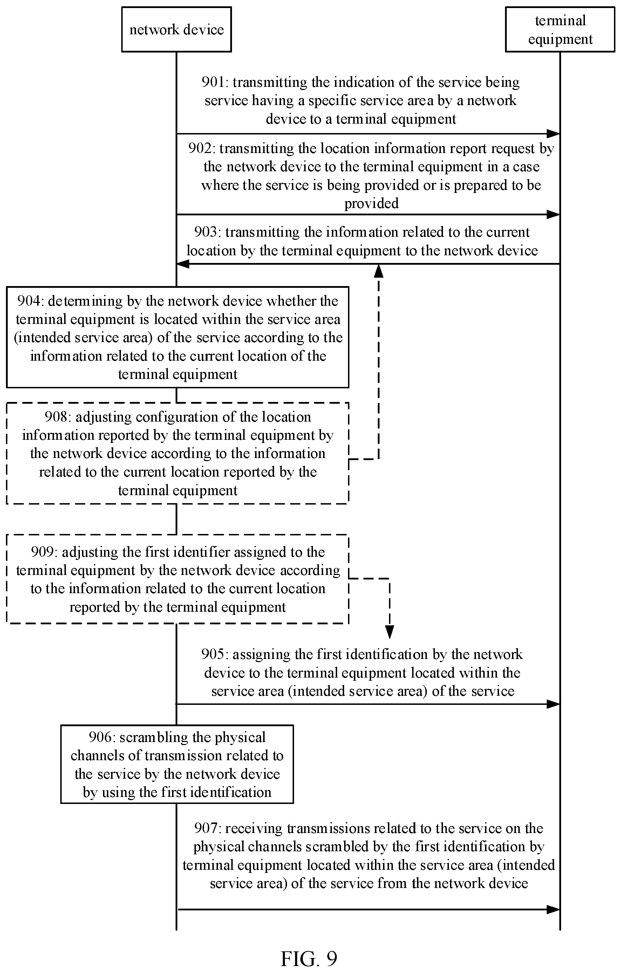

FIG. 9 is an interaction graph of the third implementation of the information transceiving method of the embodiment of this disclosure. As shown in FIG. 9, the method includes:
901: transmitting the indication of the service being service having a specific service area by a network device to a terminal equipment;
902: transmitting the location information report request by the network device to the terminal equipment in a case where the service is being provided or is prepared to be provided;
903: transmitting the information related to the current location by the terminal equipment to the network device;
904: determining by the network device whether the terminal equipment is located within the service area (intended service area) of the service according to the information related to the current location of the terminal equipment;
905: assigning the first identification by the network device to the terminal equipment located within the service area (intended service area) of the service;
906: scrambling the physical channels of transmission related to the service by the network device by using the first identification;
907: receiving transmissions related to the service on the physical channels scrambled by the first identification by terminal equipment located within the service area (intended service area) of the service from the network device.

In some embodiments, if valid current location information of the terminal equipment is stored in the network device, operations 802-803 and 902-903 may be omitted.

In some embodiments, as shown in FIG. 9, the method further includes an optional operation as follows:
908: adjusting configuration of the location information reported by the terminal equipment by the network device according to the information related to the current location reported by the terminal equipment, such as executing operation 903 according to the adjusted configuration.

For example, the adjusted configuration includes at least one of the following:
a type of a report; a type of location information required to be reported; a mode of notification; a notified terminal equipment; a cycle of reporting; a frequency of reporting.

For example, when a location reported by the terminal equipment is closer to the boundary of the service area (intended service area) than a previously reported location, the terminal equipment is instructed to increase the frequency of reporting.

In some embodiments, as shown in FIG. 9, the method further includes an optional operation as follows:
909: adjusting the first identification assigned to the terminal equipment by the network device according to the information related to the current location reported by the terminal equipment, such as executing operation 905 according to the adjusted first identification.

For example, a mode of adjusting the first identification assigned to the terminal equipment includes at least one of the following:
adding the first identification;
modifying the identifications already assigned to the terminal equipment to include the first identification;
releasing the first identification already assigned to the terminal equipment; and
deleting the first identification already assigned to the terminal equipment.

For example, for a terminal equipment that has already been assigned a specific identification for decoding services, when the network device does not receive an intended report of information related a current location of the terminal equipment or a reported current location of the terminal equipment is outside the intended service area of the service, the network device releases the specific identification of the terminal equipment.

Hence, in the third implementation, whether the terminal equipment is located within the intended service area of the service and whether the terminal equipment is able to monitor, detect and decode services with restricted service areas are determined by the network. For example, terminal equipments outside the intended service area of the service are distinguished by using the specific identification according to the location of the terminal equipment, and related services are scheduled by using the specific identification, so that the terminal equipments outside the intended service area are unable to resolve transmission related to the services, that is, prohibited related services are not provided to these terminal equipments. In addition, for example, according to the report of the terminal equipment and the information related to the current location stored in the network, the network may not only determine whether the terminal equipment is within the intended service area, but also determine a movement trend of the terminal equipment, and adjust the configuration of reporting the information related to the current location by the terminal equipment, such as increasing the frequency of reporting to obtain changes in the location of the terminal equipment more timely, or reducing the frequency of reporting to save reporting overhead, etc.

It can be seen from the above embodiment that a processing manner for a service with a service area that is restricted may be adjusted according to a restriction attribute of the service. For example, for a service that is not applicable outside an intended service area, a terminal equipment may determine whether it is within the intended service area and how to process the service, such as monitoring the service in advance when the terminal equipment is approaching the intended service area, thereby improving flexibility. For a service that is prohibited outside the intended service area, the network determines whether the terminal equipment is within the intended service area and assigns a specific identification to the terminal equipment accordingly. Hence, stricter restrictions are supplemented according to a restriction degree of the service, and by scrambling a channel by using a specific identification, use of related services by the terminal equipment outside the intended service area may be avoided.

### Embodiment of a second aspect

The embodiment of this disclosure provides an information transceiving method. This method is applicable to a network device, and corresponds to the information transceiving method applicable to the terminal equipment described in the embodiment of the first aspect, and reference may be made to the embodiment of the first aspect for identical or corresponding content.

This method is applicable to a network device, such as the network device 101 in FIG. 2.

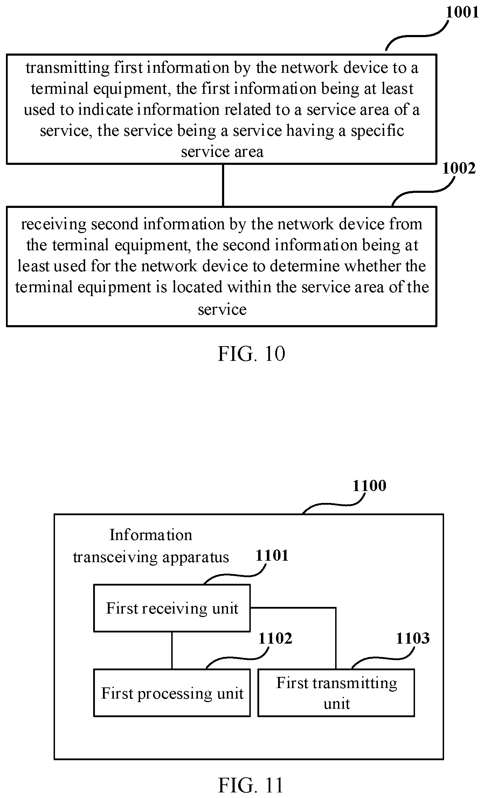

FIG. 10 is a schematic diagram of the information transceiving method of the embodiment of this disclosure. As shown in FIG. 10, the method includes:
1001: transmitting first information by the network device to a terminal equipment, the first information being at least used to indicate information related to a service area of a service, the service being a service having a specific service area; and/or,
1002: receiving second information by the network device from the terminal equipment, the second information being at least used for the network device to determine whether the terminal equipment is located within the service area of the service.

In some embodiments, the first information includes an indication of the service being a service having a specific service area and/or information of a service area of the service,
wherein the indication of the service being a service having a specific service area includes at least one of the following:
a new introduced parameter or a definition enhanced existing parameter in a SIB or configuration information related to the service ;or
instructing the terminal equipment to report location-related information in a SIB or configuration information related to the service, and/or,
the information of a service area of the service includes at least one of the following:
   a specific beam identification or a list of beam identifications;
   a specific PLMN ID or a list of PLMN IDs;
   a specific mobile country code (MCC) or a list of mobile country codes;
   a specific mobile network code (MNC) or a list of mobile network codes;
   a specific tracking area identification (TAI) or a list of mobile tracking area identifications; and
   a specific area identification (Area ID) or a list of area identifications, the area identification being an identification assigned by a network for a planned geographical area.

In some embodiments, the second information includes a location reporting request indication transmitted by the terminal equipment to the network device and/or information related to a current location of the terminal equipment.

In some embodiments, the method further includes:
transmitting third information by the network device to the terminal equipment, the third information being at least used to indicate whether the terminal equipment is located within the service area of the service,
wherein the third information includes at least one of the following:
   a dedicated identification;
   a bit indicating whether the terminal equipment is within the service area; and
   a bit indicating that the terminal equipment is within the service area.

In some embodiments, the method further includes:
for the terminal equipment within the service area, transmitting a first identification and fourth information by the network device, the first identification being at least used to scramble transmission on a physical channel related to the service,
and the fourth information including at least one of the following:
   scheduling information related to the service;
   configuration information related to the service; or
   specific content of the service.

In some embodiments, the method further includes:
in a case where the network device is providing the service or preparing to provide the service, transmitting the location information reporting request by the network device to the terminal equipment.

In some embodiments, a type of the reporting includes at least one of the following: reporting aperiodically; report semi-persistently; and reporting periodically;
and the network device transmits the location information reporting request by broadcast or in a terminal equipment-specific manner.

In some embodiments, the method further includes:
determining by the network device whether the terminal equipment is within the service area of the service according to the information related to the current location of the terminal equipment; and/or
scrambling transmission on a physical channel related to the service by the network device by using the first identification,
wherein the current location of the terminal equipment is available, latest and valid information related to the current location of the terminal equipment in a network.

In some embodiments, the method further includes:
in a case where the network device is providing the service or preparing to provide the service, transmitting the location information reporting request to the terminal equipment by broadcast or in a terminal equipment-specific manner.

In some embodiments, the manner of broadcast includes at least one of the following:
broadcasting in an entire cell, the cell including both the service area and the non-service area of the service;
broadcasting in an entire cell, the cell being providing or being to provide the service; or
broadcasting only on a specific beam, only a part of a coverage area of the beam belonging to the service area of the service.

In some embodiments, the location information reporting request is transmitted in a dedicated manner to at least one of the following terminal equipments:
all terminal equipments in a cell;
a terminal equipment with only a part of a coverage area of reported location information mapping belonging to the service area of the service;
a terminal equipment that reports a specific beam, only a part of a coverage area of the beam belonging to the service area of the service;
a terminal equipment that reports multiple pieces of location information of the same type;
a terminal equipment which reports a location that is near a boundary of the service area of the service;
a terminal equipment with a newly reported location that is closer to the boundary of the service area of the service than a previously reported location; or
a terminal equipment which reports a location near the boundary of the service area of the service and with a newly reported location that is closer to the boundary of the service area of the service than a previously reported location.

In some embodiments, the method further includes:
adjusting configuration of the location information reported by the terminal equipment according to the information related to the current location reported by the terminal equipment.

In some embodiments, the adjusted configuration includes at least one of the following:
a type of a report; a type of location information required to be reported; a mode of notification; a notified terminal equipment; a cycle of reporting; a frequency of reporting.

In some embodiments, the method further includes:
assigning a first identification to a terminal equipment satisfying a second condition, the first identification being at least used to scramble transmission on a physical channel related to the service,
wherein a manner for assigning the first identification includes at least one of the following:
   adding the first identification to the terminal equipment satisfying the second condition; and
   modifying identifications already assigned to the terminal equipment satisfying the second condition, so that the identifications already assigned to the terminal equipment satisfying the second condition include the first identification,
   and the second condition includes at least one of the following:
      within the intended service area of the service;
      within the service area of the service and a distance from the boundary of the intended service area is less than a second threshold, but without moving towards the boundary of the service area of the service; or
      within the service area of the service and a distance from the boundary of the service area of the service is greater than or equal to the second threshold.

In some embodiments, the method further includes:
adjusting the first identification assigned to the terminal equipment according to the information related to the current location reported by the terminal equipment.

In some embodiments, a mode of adjusting the first identification assigned to the terminal equipment includes at least one of the following:
adding the first identification;
modifying the identifications already assigned to the terminal equipment to include the first identification;
releasing the first identification already assigned to the terminal equipment; and
deleting the first identification already assigned to the terminal equipment.

In some embodiments, for MBS services, the first identification includes at least one of a G-RNTI, a G-CS-RNTI, and an MCCH-RNTI.

In the embodiment of this disclosure, reference may be made to relevant description of the embodiment of the first aspect for implementations of the above operations, which shall not be repeated herein any further.

It can be seen from the above embodiment that a processing manner for a service with a service area that is restricted may be adjusted according to a restriction attribute of the service. For example, for a service that is not applicable outside an intended service area, a terminal equipment may determine whether it is within the intended service area and how to process the service, such as monitoring the service in advance when the terminal equipment is approaching the intended service area, thereby improving flexibility. For a service that is prohibited outside the intended service area, the network determines whether the terminal equipment is within the intended service area and assigns a specific identification to the terminal equipment accordingly. Hence, stricter restrictions are supplemented according to a restriction degree of the service, and by scrambling a channel by using a specific identification, use of related services by the terminal equipment outside the intended service area may be avoided.

### Embodiment of a third aspect

The embodiment of this disclosure provides an information transceiving apparatus, provided in a terminal equipment. As a principle of the apparatus is identical to that of the method in the embodiment of the first aspect, reference may be made to the embodiment of the first aspect for implementation of the apparatus, with identical or related parts being not going to be described herein any further.

FIG. 11 is a schematic diagram of the information transceiving apparatus of the embodiment of this disclosure. As shown in FIG. 11, an information transceiving apparatus 1100 includes:
a first receiving unit 1101 configured to receive first information from a network device, the first information being at least used to indicate information related to a service area of a service, the service being a service having a specific service area; and
a first processing unit 1102 configured to determine a procedure of the service according to the first information; or
a first transmitting unit 1103 configured to transmit second information to the network device, the second information being at least used for the network device to determine whether the terminal equipment is located within the service area of the service.

In some embodiments, the first information includes:
an indication of the service being a service having a specific service area and/or information of a service area of the service.

In some embodiments, the indication of the service being a service having a specific service area includes at least one of the following:
a new introduced parameter or a definition enhanced existing parameter in a SIB or configuration information related to the service; or
instructing the terminal equipment to report location-related information in a SIB or configuration information related to the service, and/or,
the information of a service area of the service includes at least one of the following:
   a specific beam identification or a list of beam identifications;
   a specific PLMN ID or a list of PLMN IDs;
   a specific mobile country code (MCC) or a list of mobile country codes;
   a specific mobile network code (MNC) or a list of mobile network codes;
   a specific tracking area identification (TAI) or a list of mobile tracking area identifications; and
   a specific area identification (Area ID) or a list of area identifications, the area identification being an identification assigned by a network for a planned geographical area.

In some embodiments, according to the information of the service area of the service and information related to a current location of the terminal equipment, the first processing unit 1102 determines whether the terminal equipment is located within the service area of the service,
and the first processing unit 1102 determines the procedure of the service according to whether the terminal equipment is located within the service area of the service.

In some embodiments, a manner of transmitting the second information by the first transmitting unit 1103 to the network device includes at least one of the following:
transmitting the second information to the network device in a conventional manner;
periodically transmitting the second information according to configuration of the network device; and
transmitting the second information to the network device when the terminal equipment is interested in the service,
the second information including a location reporting request indication transmitted by the terminal equipment to the network device and/or the information related to the current location of the terminal equipment.

In some embodiments, the information related to the current location of the terminal equipment includes at least one of the following:
a beam identification (ID);
a PLMN ID;
a mobile country code MCC;
a mobile network code MNC;
a tracking area identification (TAI);
an area ID assigned by the network;
user location information (ULI);
an RAN area ID;
a zone ID; or
a terminal equipment location determined based on GNSS or a wireless network or WLAN or Bluetooth or a sensor or a TBS location.

In some embodiments, the first receiving unit 1101 receives third information from the network device, the third information being at least used to indicate whether the terminal equipment is located within the service area of the service,
and the first processing unit 1102 determines the procedure of the service according to whether the terminal equipment is located within the service area of the service.

In some embodiments, the third information includes at least one of the following:
a dedicated identification;
a bit indicating whether the terminal equipment is within the service area; and
a bit indicating that the terminal equipment is within the service area.

In some embodiments, that the first processing unit 1102 determines the procedure of the service according to whether the terminal equipment is located within the service area of the service includes at least one of the following that:
when the terminal equipment is within the service area, the first processing unit 1102 reads configuration related to the service and obtains content of the service;
when the terminal equipment is outside the service area, the first processing unit 1102 stops or reduces at least one of monitoring, detecting, decoding and obtaining information related to the service; or
when the terminal equipment is outside the service area and a first condition is satisfied, the first processing unit 1102 starts or adds at least one of monitoring, detecting, decoding and obtaining information related to the service.

In some embodiments, the information related to the service includes at least one of the following:
system information related to the service;
scheduling information related to the service;
configuration information related to the service; or
specific content of the service;
and the first condition includes at least one of the following that:
   a distance between the terminal equipment and a boundary of the service area is less than a first threshold; and
   the terminal equipment is moving towards a boundary of the service area.
   In some embodiments, for the terminal equipment within the service area, the first receiving unit 1101 further receives a first identification and fourth information, the first identification being at least used to scramble transmission on a physical channel related to the service,
   and the fourth information including at least one of the following:
      scheduling information related to the service;
      configuration information related to the service; or
      specific content of the service.

It can be seen from the above embodiment that a processing manner for a service with a service area that is restricted may be adjusted according to a restriction attribute of the service. For example, for a service that is not applicable outside an intended service area, a terminal equipment may determine whether it is within the intended service area and how to process the service, such as monitoring the service in advance when the terminal equipment is approaching the intended service area, thereby improving flexibility. For a service that is prohibited outside the intended service area, the network determines whether the terminal equipment is within the intended service area and assigns a specific identification to the terminal equipment accordingly. Hence, stricter restrictions are supplemented according to a restriction degree of the service, and by scrambling a channel by using a specific identification, use of related services by the terminal equipment outside the intended service area may be avoided.

### Embodiment of a fourth aspect

The embodiment of this disclosure provides an information transceiving apparatus, provided in a network device. As a principle of the apparatus is identical to that of the method in the embodiment of the second aspect, reference may be made to the embodiment of the second aspect for implementation of the apparatus, with identical or related parts being not going to be described herein any further.

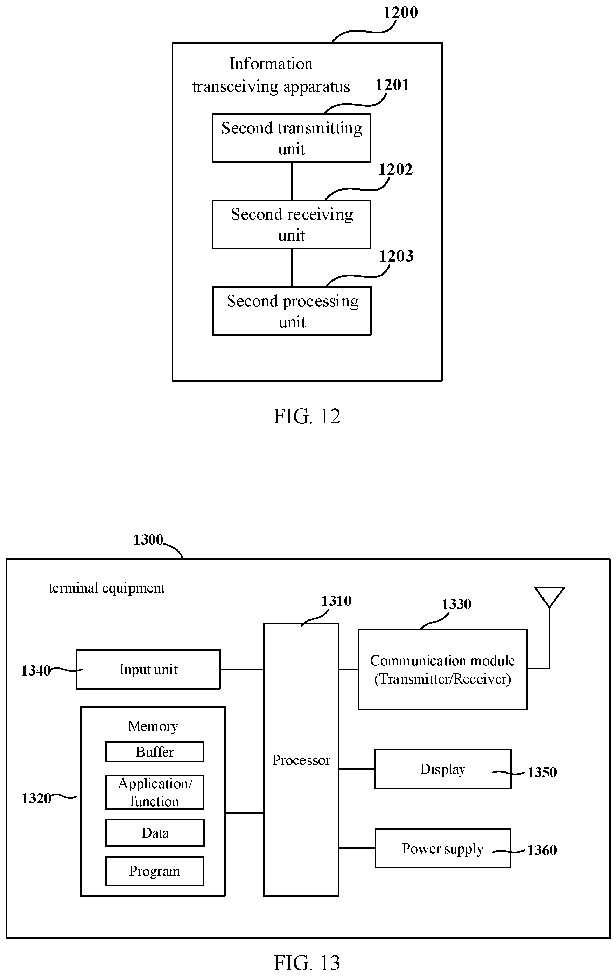

FIG. 12 is a schematic diagram of the information transceiving apparatus of the embodiment of this disclosure. As shown in FIG. 12, an information transceiving apparatus 1200 includes:
a second transmitting unit 1201 configured to transmit first information to a terminal equipment, the first information being at least used to indicate information related to a service area of a service, the service being a service having a specific service area; and/or,
a second receiving unit 1202 configured to receive second information from the terminal equipment, the second information being at least used for the network device to determine whether the terminal equipment is located within the service area of the service.
In some embodiments, the first information includes: an indication of the service being a service having a specific service area and/or information of a service area of the service,
wherein the indication of the service being a service having a specific service area includes at least one of the following:
   a new introduced parameter or a definition enhanced existing parameter in a SIB or configuration information related to the service; orinstructing the terminal equipment to report location-related information in a SIB or configuration information related to the service, and/or,
   the information of a service area of the service includes at least one of the following:
      a specific beam identification or a list of beam identifications;
      a specific PLMN ID or a list of PLMN IDs;
      a specific mobile country code (MCC) or a list of mobile country codes;
      a specific mobile network code (MNC) or a list of mobile network codes;
      a specific tracking area identification (TAI) or a list of mobile tracking area identifications; and
      a specific area identification (Area ID) or a list of area identifications, the area identification being an identification assigned by a network for a planned geographical area.

In some embodiments, the second information includes a location reporting request indication transmitted by the terminal equipment to the network device and/or information related to a current location of the terminal equipment.

In some embodiments, the second transmitting unit 1201 further transmits third information to the the terminal equipment, the third information being at least used to indicate whether the terminal equipment is located within the service area of the service,
wherein the third information includes at least one of the following:
a dedicated identification;
a bit indicating whether the terminal equipment is within the service area; and
a bit indicating that the terminal equipment is within the service area.
In some embodiments, for the terminal equipment within the service area, the second transmitting unit 1201 further transmits a first identification and fourth information, the first identification being at least used to scramble transmission on a physical channel related to the service,
and the fourth information including at least one of the following:
   scheduling information related to the service;
   configuration information related to the service; or
   specific content of the service.

In some embodiments, the second transmitting unit 1201 further transmits a location information reporting request to the terminal equipment when the network device is providing the service or preparing to provide the service.

In some embodiments, a type of the reporting includes at least one of the following: reporting aperiodically; report semi-persistently; and reporting periodically;
and the second transmitting unit transmits the location information reporting request by broadcast or in a terminal equipment-specific manner.

In some embodiments, as shown in FIG. 12, the apparatus further includes:
a second processing unit 1203 configured to determine whether the terminal equipment is located within the service area of the service according to the information related to the current location of the terminal equipment,
and/or, scramble transmission on a physical channel related to the service by using the first identification,
in some embodiments, the current location of the terminal equipment is available, latest and valid information related to the current location of the terminal equipment in a network.

It can be seen from the above embodiment that a processing manner for a service with a service area that is restricted may be adjusted according to a restriction attribute of the service. For example, for a service that is not applicable outside an intended service area, a terminal equipment may determine whether it is within the intended service area and how to process the service, such as monitoring the service in advance when the terminal equipment is approaching the intended service area, thereby improving flexibility. For a service that is prohibited outside the intended service area, the network determines whether the terminal equipment is within the intended service area and assigns a specific identification to the terminal equipment accordingly. Hence, stricter restrictions are supplemented according to a restriction degree of the service, and by scrambling a channel by using a specific identification, use of related services by the terminal equipment outside the intended service area may be avoided.

### Embodiment of a fifth aspect

The embodiment of this disclosure provides a terminal equipment, including the information transceiving apparatus described in the embodiment of the third aspect.

FIG. 13 is a block diagram of a systematic structure of the terminal equipment of the embodiment of this disclosure. As shown in FIG. 13, a terminal equipment 1300 may include a processor 1310 and a memory 1320, the memory 1320 being coupled to the processor 1310. It should be noted that this figure is illustrative only, and other types of structures may also be used, so as to supplement or replace this structure and achieve a telecommunications function or other functions.

In one implementation, the functions of the information transceiving apparatus may be integrated into the processor 1310.

The processor 1301 may be configured to: receive first information from a network device, the first information being at least used to indicate information related to a service area of a service, the service being a service having a specific service area; and determine a procedure of the service according to the first information; or transmit second information to the network device, the second information being at least used for the network device to determine whether the terminal equipment is located within the service area of the service.

In another implementation, the information transceiving apparatus and the processor 1310 may be configured separately; for example, the information transceiving apparatus may be configured as a chip connected to the processor 1310, and the functions of the information transceiving apparatus are executed under control of the processor 1310.

As shown in FIG. 13, the terminal equipment 1300 may further include a communication module 1330, an input unit 1340, a display 1350, and a power supply 1360. It should be noted that the terminal equipment 1300 does not necessarily include all the parts shown in FIG. 13, and the above components are not necessary. Furthermore, the terminal equipment 1300 may include parts not shown in FIG. 13, and the related art may be referred to.

As shown in FIG. 13, the processor 1310 is sometimes referred to as a controller or an operational control, which may include a microprocessor or other processor devices and/or logic devices. The processor 1310 receives input and controls operations of components of the terminal equipment 1300.

In some embodiments, the memory 1320 may be, for example, one or more of a buffer memory, a flash memory, a hard drive, a mobile medium, a volatile memory, a nonvolatile memory, or other suitable devices, which may store various data, etc., and furthermore, store programs executing related information. And the processor 1310 may execute programs stored in the memory 1320, so as to realize information storage or processing, etc. Functions of other parts are similar to those of the related art, which shall not be described herein any further. The parts of the terminal equipment 1300 may be realized by specific hardware, firmware, software, or any combination thereof, without departing from the scope of this disclosure.

It can be seen from the above embodiment that a processing manner for a service with a service area that is restricted may be adjusted according to a restriction attribute of the service. For example, for a service that is not applicable outside an intended service area, a terminal equipment may determine whether it is within the intended service area and how to process the service, such as monitoring the service in advance when the terminal equipment is approaching the intended service area, thereby improving flexibility. For a service that is prohibited outside the intended service area, the network determines whether the terminal equipment is within the intended service area and assigns a specific identification to the terminal equipment accordingly. Hence, stricter restrictions are supplemented according to a restriction degree of the service, and by scrambling a channel by using a specific identification, use of related services by the terminal equipment outside the intended service area may be avoided.

### Embodiment of a sixth aspect

The embodiment of this disclosure provides a network device, including the information transceiving apparatus described in the embodiment of the fourth aspect.

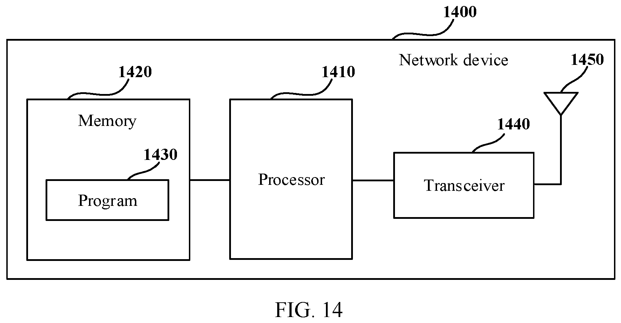

FIG. 14 is a schematic diagram of a systematic structure of the network device of the embodiment of this disclosure. As shown in FIG. 14, a network device 1400 may include a processor 1410 and a memory 1420, the memory 1420 being coupled to the processor 1410. Wherein, the memory 1420 may store various data, and furthermore, it may store a program 1430 for data processing, and execute the program 1430 under control of the processor 1410, so as to receive various information transmitted by a terminal equipment, and transmit various information to the terminal equipment.

In one implementation, the functions of the information transceiving apparatus may be integrated into the processor 1410.

The processor 1410 may be configured to: transmit first information to a terminal equipment, the first information being at least used to indicate information related to a service area of a service, the service being a service having a specific service area; and/or, receive second information from the terminal equipment, the second information being at least used for the network device to determine whether the terminal equipment is located within the service area of the service.

In another implementation, the information transceiving apparatus and the processor 1410 may be configured separately; for example, the information transceiving apparatus may be configured as a chip connected to the processor 1410, and the functions of the transceiving apparatus apparatus are executed under control of the processor 1410.

Furthermore, as shown in FIG. 14, the network device 1400 may include a transceiver 1440, and an antenna 1450, etc. Wherein, functions of the above components are similar to those in the related art, and shall not be described herein any further. It should be noted that the network device 1400 does not necessarily include all the parts shown in FIG. 14. Furthermore, the network device 1400 may include parts not shown in FIG. 14, and the related art may be referred to.

It can be seen from the above embodiment that a processing manner for a service with a service area that is restricted may be adjusted according to a restriction attribute of the service. For example, for a service that is not applicable outside an intended service area, a terminal equipment may determine whether it is within the intended service area and how to process the service, such as monitoring the service in advance when the terminal equipment is approaching the intended service area, thereby improving flexibility. For a service that is prohibited outside the intended service area, the network determines whether the terminal equipment is within the intended service area and assigns a specific identification to the terminal equipment accordingly. Hence, stricter restrictions are supplemented according to a restriction degree of the service, and by scrambling a channel by using a specific identification, use of related services by the terminal equipment outside the intended service area may be avoided.

### Embodiment of a seventh aspect

The embodiment of this disclosure provides a communication system, including the terminal equipment described in the embodiment of the fifth aspect and/or the network device described in the embodiment of the sixth aspect, and reference may be made to the embodiment of the fifth aspect and the embodiment of the sixth aspect for specific content.

For example, reference may be made to FIG. 2 for a structure of the communication system. As shown in FIG. 2, the communication system 100 includes the network device 101 and the terminal equipment 102. The terminal equipment 102 may be identical to the terminal equipment described in the embodiment of the fifth aspect, and/or, the network device 101 may be identical to the network device described in the embodiment of the sixth aspect, with repeated parts being not going to be described herein any further.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIG. 11 may either correspond to software modules of procedures of a computer program, or correspond to hardware modules. Such software modules may respectively correspond to the steps shown in FIG. 3. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIG. 11 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in FIG. 11 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the principle of this disclosure, and such variants and modifications fall within the scope of this disclosure.

According to the implementations disclosed in the embodiments of this disclosure, following supplements are further disclosed.
1. An information transceiving method, applicable to a network device, the method including:
   transmitting first information to a terminal equipment, the first information being at least used to indicate information related to a service area of a service, the service being a service having a specific service area; and/or,
   receiving second information from the terminal equipment, the second information being at least used for the network device to determine whether the terminal equipment is located within the service area of the service.
2. The method according to supplement 1, wherein the method further includes:
   in a case where the network device is providing the service or preparing to provide the service, transmitting the location information reporting request by the network device to the terminal equipment by broadcast or in a terminal equipment-specific manner.
3. The method according to supplement 2, wherein,
   the manner of broadcast includes at least one of the following:
   broadcasting in an entire cell, the cell including both the service area and the non-service area of the service;
   broadcasting in an entire cell, the cell being providing or being to provide the service; or
   broadcasting only on a specific beam, only a part of a coverage area of the beam belonging to the service area of the service.
4. The method according to supplement 2, wherein the location information reporting request is transmitted in a dedicated manner to at least one of the following terminal equipments:
   all terminal equipments in a cell;
   a terminal equipment with only a part of a coverage area of reported location information mapping belonging to the service area of the service;
   a terminal equipment that reports a specific beam, only a part of a coverage area of the beam belonging to the service area of the service;
   a terminal equipment that reports multiple pieces of location information of the same type;
   a terminal equipment which reports a location that is near a boundary of the service area of the service;
   a terminal equipment with a newly reported location that is closer to the boundary of the service area of the service than a previously reported location; or
   a terminal equipment which reports a location near the boundary of the service area of the service and with a newly reported location that is closer to the boundary of the service area of the service than a previously reported location.
5. The method according to supplement 2, wherein the method further includes:
   adjusting configuration of the location information reported by the terminal equipment according to the information related to the current location reported by the terminal equipment.
6. The method according to supplement 5, wherein the adjusted configuration includes at least one of the following:
   a type of a report; a type of location information required to be reported; a mode of notification; a notified terminal equipment; a cycle of reporting; a frequency of reporting.
7. The method according to supplement 1, wherein the method further includes:
   assigning a first identification to a terminal equipment satisfying a second condition, the first identification being at least used to scramble transmission on a physical channel related to the service,
   wherein a manner for assigning the first identification includes at least one of the following:
      adding the first identification to the terminal equipment satisfying the second condition; and
      modifying identifications already assigned to the terminal equipment satisfying the second condition, so that the identifications already assigned to the terminal equipment satisfying the second condition include the first identification,
      and the second condition includes at least one of the following:
         within the intended service area of the service;
         within the service area of the service and a distance from the boundary of the intended service area is less than a second threshold, but without moving towards the boundary of the service area of the service; or
         within the service area of the service and a distance from the boundary of the service area of the service is greater than or equal to the second threshold.
8. The method according to supplement 7, wherein the method further includes:
   adjusting the first identification assigned to the terminal equipment according to the information related to the current location reported by the terminal equipment.
9. The method according to supplement 8, wherein a mode of adjusting the first identification assigned to the terminal equipment includes at least one of the following:
   adding the first identification;
   modifying the identifications already assigned to the terminal equipment to include the first identification;
   releasing the first identification already assigned to the terminal equipment; or
   deleting the first identification already assigned to the terminal equipment.
10. The method according to supplement 7, wherein,
   for an MBS service, the first identification includes at least one of a G-RNTI, a G-CS-RNTI, or an MCCH-RNTI.

## Claims

1. An information transceiving apparatus, provided in a terminal equipment, the apparatus comprising:
a first receiving unit configured to receive first information from a network device, the first information being at least used to indicate information related to a service area of a service, the service being a service having a specific service area; and
a first processing unit configured to determine a procedure of the service according to the first information; or
a first transmitting unit configured to transmit second information to the network device, the second information being at least used for the network device to determine whether the terminal equipment is located within the service area of the service.

2. The apparatus according to claim 1, wherein,
the first information comprises an indication of the service being a service having a specific service area and/or information of a service area of the service.

3. The apparatus according to claim 2, wherein,
the indication of the service being a service having a specific service area comprises at least one of the following:
a new parameter or an enhanced existing parameter in a SIB or configuration information related to the service; and
indication of the terminal equipment to report location-related information in a SIB or configuration information related to the service,
and/or,
the information of a service area of the service comprisesat least one of the following:
a specific beam or a list of beam s;
a specific PLMN ID or a list of PLMN IDs;
a specific mobile country code (MCC) or a list of mobile country codes;
a specific mobile network code (MNC) or a list of mobile network codes;
a specific tracking area (TAI) or a list of mobile tracking area s; and
a specific area identification (Area ID) or a list of area identification, the area identification being an identification assigned by a network for a planned geographical area.

4. The apparatus according to claim 1, wherein,
the first processing unit determines whether the terminal equipment is located within the service area of the service according to information of a service area of the service and information related to a current location of the terminal equipment, and
the first processing unit determines the procedure of the service according to whether the terminal equipment is located within the service area of the service.

5. The apparatus according to claim 1, wherein,
a manner of transmitting the second information by the first transmitting unit to the network device comprises at least one of the following:
transmitting the second information to the network device in a conventional manner;
periodically transmitting the second information according to configuration of the network device; and
transmitting the second information to the network device when the terminal equipment is interested in the service,
the second information comprising a location reporting request indication transmitted by the terminal equipment to the network device and/or the information related to a current location of the terminal equipment.

6. The apparatus according to claim 4 or 5, wherein,
the information related to a current location of the terminal equipment comprises at least one of the following:
a beam identification (Beam ID);
a PLMN ID;
a mobile country code MCC;
a mobile network code MNC;
a tracking area identification(TAI);
an area ID assigned by the network;
user location information (ULI);
an RAN area ID;
a zone ID; or
a terminal equipment location determined based on GNSS or a wireless network or WLAN or Bluetooth or a sensor or a TBS location.

7. The apparatus according to claim 5, wherein,
the first receiving unit further receives third information from the network device, the third information being at least used to indicate whether the terminal equipment is located within the service area of the service, and
the first processing unit determines the procedure of the service according to whether the terminal equipment is located within the service area of the service.

8. The apparatus according to claim 7, wherein, the third information comprises at least one of the following:
a dedicated identification;
a bit indicating whether the terminal equipment is within the service area; or
a bit indicating that the terminal equipment is within the service area.

9. The apparatus according to claim 4 or 7, wherein that the first processing unit determines whether the terminal equipment is located within the service area of the service according to information of a service area of the service and information related to a current location of the terminal equipment, comprises at least one of the following that:
when the terminal equipment is located within the service area, the first processing unit reads configuration related to the service and obtains content of the service;
when the terminal equipment is outside the service area, the first processing unit stops or reduces at least one of monitoring, detecting, decoding and obtaining information related to the servicewhen the terminal equipment is outside the service area and a first condition is satisfied, the first processing unit starts or adds at least one of monitoring, detecting, parsing and obtaining information related to the service.

10. The apparatus according to claim 9, wherein,
the information related to the service comprises at least one of the following:
system information related to the service;
scheduling information related to the service;
configuration information related to the service; or
specific content of the service;
and the first condition comprises at least one of the following that:
a distance between the terminal equipment and a boundary of the service area is less than a first threshold; and
the terminal equipment is moving towards a boundary of the service area.

11. The apparatus according to claim 5, wherein,
for the terminal equipment within the service area, the first receiving unit further receives a first identification and fourth information, the first identification being at least used to scramble transmission on a physical channel related to the service, and
the fourth information comprising at least one of the following:
scheduling information related to the service;
configuration information related to the service; or
specific content of the service.

12. An information transceiving apparatus, provided in a network device, the apparatus comprising:
a second transmitting unit configured to transmit first information to a terminal equipment, the first information being at least used to indicate information related to a service area of a service, the service being a service having a specific service area; and/or,
a second receiving unit configured to receive second information from the terminal equipment, the second information being at least used for the network device to determine whether the terminal equipment is located within the service area of the service.

13. The apparatus according to claim 12, wherein,
the first information comprises an indication of the service being a service having a specific service area and/or information of a service area of the service,
the indication of the service being a service having a specific service area comprises at least one of the following:
a new parameter introduced into a SIB or configuration information related to the service or enhancing a definition of an existing parameter;
instructing the terminal equipment to report location-related information in a SIB or configuration information related to the service,
and/or,
the information of a service area of the service comprises at least one of the following:
a specific beam identificationor a list of beam identifications;
a specific PLMN ID or a list of PLMN IDs;
a specific mobile country code (MCC) or a list of mobile country codes;
a specific mobile network code (MNC) or a list of mobile network codes;
a specific tracking area identification (TAI) or a list of mobile tracking area identifications; and
a specific area identification (Area ID) or a list of area identifications, the area identification being anidentificationassigned by a network for a planned geographical area.

14. The apparatus according to claim 12, wherein,
the second information comprises a location reporting request indication transmitted by the terminal equipment to the network device and/or information related to a current location of the terminal equipment.

15. The apparatus according to claim 12, wherein,
the second transmitting unit further transmits third information to the terminal equipment, the third information being at least used to indicate whether the terminal equipment is located within the service area of the service,
the third information comprises at least one of the following:
a dedicated identification;
a bit indicating whether the terminal equipment is within the service area; or
a bit indicating that the terminal equipment is within the service area.

16. The apparatus according to claim 12, wherein,
for the terminal equipment within the service area, the second transmitting unit further transmits a first identification and fourth information, the first identification being at least used to scramble transmission on a physical channel related to the service, and
the fourth information comprising at least one of the following:
scheduling information related to the service;
configuration information related to the service; or
specific content of the service.

17. The apparatus according to claim 16, wherein,
the second transmitting unit further transmits a location information reporting request to the terminal equipment when the network device is providing the service or preparing to provide the service.

18. The apparatus according to claim 17, wherein,
a type of the reporting comprises at least one of the following: reporting aperiodically; report semi-persistently; or reporting periodically;
and the second transmitting unit transmits the location information reporting request by broadcast or in a terminal equipment-specific manner.

19. The apparatus according to claim 12, wherein the apparatus further comprises:
a second processing unit configured to determine whether the terminal equipment is located within the service area of the service according to the information related to a current location of the terminal equipment, and/or
a second processing unit configured to scramble transmission on a physical channel related to the service by using a first identification,
the current location of the terminal equipment is available, latest and valid information related to the current location of the terminal equipment in a network.

20. A communication system, the communication system comprising a terminal equipment and a network device, the terminal equipment comprises the apparatus as described in claim 1, and/or
the network device comprises the apparatus as described in claim 12.
